# EUROPEAN PATENT APPLICATION

(11) **EP 4 030 366 A1**
(43) Date of publication of application: **20.07.2022**
(21) Application number: 21151591.1
(22) Date of filing: 14.01.2021
(51) Int. Cl.: G06Q 10/06

(54) **METHOD AND SYSTEM FOR AUTOMATIC SERVICE LEVEL AGREEMENT CONFLICT AND ACCOUNTABILITY RESOLUTION**

(71) Applicant: ABB Schweiz AG, 5400 Baden (CH)
(72) Inventor: LOCHER, Thomas, 8050 Zürich (CH); KOZHAYA, David, 8953 Dietikon (CH); DAN, Andrei, 8057 Zürich (CH)
(74) Representative: Zimmermann & Partner Patentanwälte mbB

(57) **Abstract**

A method for automatic conflict and accountability resolution in case of a violation of service level agreement (SLA) terms and conditions in industrial service applications is described. The method comprises the following steps: providing an industrial service by a service provider (11) to at least one device (14) or application of a customer (12) according to a contract (17) defining a customer service level agreement; providing repair and/maintenance services by a contractor (13) for the at least one device (14) or application according to a contract (18) defining a contractor service level agreement; encoding a customer service level agreement or a contractor service level agreement as a smart contract by an interpreter (16); providing a distributed ledger (20) configured for immutably storing contract and transaction data generated by a contracting party, the at least one device (14) or application or the interpreter (16); automatically monitoring and/or processing SLA related issues by running at least one smart contract (21) in the distributed ledger (20); and providing substantially automated communication regarding SLA related issues between the distributed ledger (20) and the service provider (11) by the interpreter (16). Further, a system (10) for automatic conflict and accountability resolution in case of a violation of service level agreement (SLA) terms and conditions in industrial service applications is described.

## Description

Embodiments of the present disclosure relate to a method for resolution in case of a violation of service level agreement terms and conditions in industrial service applications. Additionally, embodiments of the present disclosure relate to a system for resolution in case of a violation of service level agreement terms and conditions in industrial service applications.

### BACKGROUND

Service level agreements (SLA) act as a legally binding contract that obligates service providers to comply with their promised quality of service. SLAs are thus part of virtually all industrial service contracts across a wide range of use case scenarios and domains. For example, SLAs define how to resolve conflicts and determine accountability and liability if the agreed upon service terms are not met.

Typically, even if well-defined SLAs are in place, resolving conflicts and assigning accountability/liability is nowadays a lengthy process, requiring the collection of evidence to prove the guilt or innocence of a given party. This process typically includes a lengthy chain of communication exchanges among the involved parties which can last up to several months, until consensus is reached on the fact that some violation of the SLA indeed has occurred and which parties are liable. Thus, resolving conflicts and assigning accountability is not only an inefficient but also time-consuming and therefore costly process.

WO 2016/166725 A1 discloses a method for monitoring service level agreement violation mitigation through multi-level thresholds in a cloud infrastructure by electronic devices. WO 2019/047030 A1 describes a method for managing service level agreements in a distributed cloud environment, involving automatically mitigating possible service level agreement violations by cooperation with a cloud manager and a security management system. Both known methods are at least not sufficiently suited for use in an industrial service environment.

Accordingly, in view of the above, there exists a demand for providing conflict and accountability automation for industrial services in a secure, trustworthy and traceable fashion resulting in shorter conflict resolution times and thus significantly lower incurred costs in case of contract violations or disputes.

### SUMMARY

In light of the above, a method for automatic conflict and accountability resolution in case of a violation of service level agreement (SLA) terms and conditions in industrial service applications as described herein, and a system for automatic conflict and accountability resolution in case of a violation of service level agreement (SLA) terms and conditions in industrial service applications according to the independent claims are provided. Further aspects, advantages, and features are apparent from the dependent claims, the description, and the accompanying drawings.

According to an aspect of the present disclosure, a method for automatic conflict and accountability resolution in case of a violation of service level agreement (SLA) terms and conditions in industrial service applications comprises the steps of providing an industrial service by a service provider to at least one device or application of a customer according to a contract defining a customer service level agreement; providing repair and/or maintenance services by a contractor for at least one device or application according to a contract defining a contractor service level agreement; encoding a customer service level agreement or a contractor service level agreement as a smart contract by an interpreter; providing a distributed ledger configured for immutably storing contract and transaction data generated by a contracting party, the at least one device or application or the interpreter; automatically monitoring and/or processing SLA related issues by running at least one smart contract in the distributed ledger; and providing substantially automated communication regarding SLA related issues between the distributed ledger and the service provider by the interpreter.

Accordingly, compared to the state of the art, the method of the present disclosure provides for essentially automated previously human work and interaction thereby significantly reducing conflict resolution times and thus incurred costs in case of contract violations or disputes. In addition, embodiments of the method, as described herein, provide for the prevention of conflicts by using automatic monitoring of events and actions enabling to trigger warnings if a certain contractual condition is met.

According to a further aspect of the present disclosure, a system for automatic conflict and accountability resolution in case of a violation of service level agreement (SLA) terms and conditions in industrial service applications comprises a service provider providing an industrial service to at least one device or application of a customer according to a contract defining a customer service level agreement; a contractor providing repair and/or maintenance services for the at least one device or application according to a contract defining a contractor service level agreement; an interpreter configured for encoding a customer service level agreement or contractor service level agreement as a smart contract; a distributed ledger configured for immutably storing contract and transaction data generated by a contracting party, at least one device or application or the interpreter; wherein the distributed ledger is further configured for running at least one smart contract to automatically monitor and/or process SLA related issues; wherein the interpreter is further configured as a communication interface between the distributed ledger and the service provider providing substantially automated communication.

Accordingly, compared to the state of the art, the system of the present disclosure enables an immutable and traceable recording of events and actions of all involved parties, thereby automatically detecting and reporting violations of terms using smart contracts. Thus, the system of the present disclosure significantly shortens conflict resolution times and lowers incurred costs as well as contributes to the prevention of potential conflicts.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic diagram of a system for automatic conflict and accountability resolution according to embodiments described herein.
- Fig. 2: shows a workflow diagram using a method for automatic conflict and accountability resolution according to embodiments described herein.
- Fig. 3: shows a workflow diagram using a method for automatic conflict and accountability resolution according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

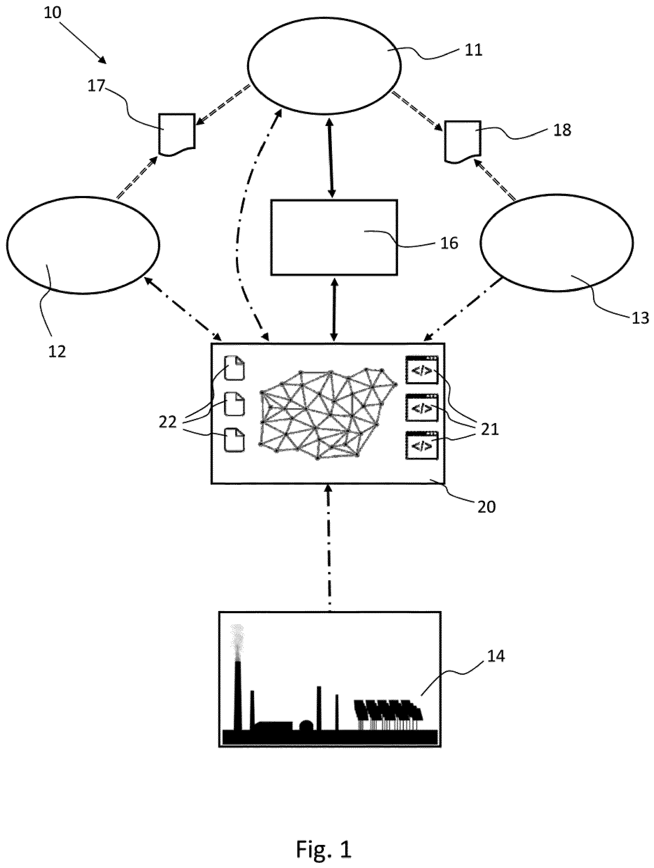

Fig. 1 shows a schematic diagram of an embodiment of a system for automatic conflict and accountability resolution. The system 10 comprises a service provider 11 providing an industrial service to at least one device 14 or application of a customer 12 according to a contract 17 defining a customer service level agreement (SLA). The service provider 11 may be any type of entity providing an industrial service for a customer 12 between which a legally binding contract 17 may be defined regarding the particulars of the service which the service provider 11 may provide to the customer 12. The customer 12 can be a person or a legal entity with which a device 14 or application is associated. In a preferred embodiment, the device 14 or application may have been built by and may belong to the service provider 11, for example a power plant built and run by a service provider for a customer who may act as a utility company selling energy to consumers.

The system 10 further comprises a contractor 13 providing repair and/or maintenance services for the at least one device 14 or application according to a legally binding contract 18 which may define a contractor service level agreement (SLA) between the contractor 13 and the service provider 11. The contractor 13 can provide and carry out repair and maintenance work at the device 14 or the application and therefore may play a major role in keeping the industrial services up and running.

In some embodiment, the system 10 comprises the distributed ledger 20 as a central component which may be configured for immutably storing contract and transaction data generated by any contracting party, i.e. by service provider 11, by customer 12 and by contractor 13, and by the at least one device 14 or application. The distributed ledger 20 may be operated by the service provider 11, the customer 12 or another party such as a cloud infrastructure provider if the contracting parties so wish. The parties or entities can interact with the distributed ledger 20 by reading from and writing to it. The distributed ledger 20 is intended to represent a consensus of replicated, shared, and synchronized digital data which may be spread across multiple sites, countries, or institutions, here across the contracting parties: service provider 11, customer 12, or another provider. The instances of the distributed ledger 20 at each party or site can be called nodes which may contain a full copy of the data and may be interconnected with each other in a peer-to-peer network. Each node may therefore be able to replicate and store an identical copy of the ledger or database and to update itself independently.

In embodiments, the system 10 further comprises an interpreter 16 configured as a communication interface between the distributed ledger 20 and the service provider 11 providing substantially automated communication. The interpreter 16 may be under the control of the service provider 11 and can be used to interpret the data and transactions recorded in the distributed ledger 20. In particular, the interpreter 16 may be configured to generate events or transactions and to send them to the service provider 11 or to the distributed ledger 20 where they are persistently stored. A central function of the interpreter 16 is furthermore the encoding of customer SLAs 17 and contractor SLAs 18 as a smart contract 21. A smart contract 21 in the embodiments of this disclosure may be a computer program, a self-executing computer code or stored procedure which is intended to automatically execute, control or document relevant events and actions according to the terms of the corresponding SLA. The smart contract 21 encoded by the interpreter 16 may be stored in the distributed ledger 20 where it can run to automatically monitor and/or process SLA related issues which may be all events, actions, reports, measurements or other transaction data which are sent to the distributed ledger 21 to be stored and/or processed. It is also possible that a transaction with a smart contract 21 may invoke another smart contract in the distributed ledger 20.

In the embodiments disclosed herein, the contract 17 which may be agreed upon between the service provider 11 and the customer 12 and which may comprise the detailed conditions for the industrial service applications may be defined as the customer SLA 17. The interpreter 16 can encode the conditions of the customer SLA 17 and thereby generate at least one smart contract 21 which can be stored in the distributed ledger 20. In a similar fashion, the conditions set out in the contract between the contractor 13 and the service provider 11 may be defined as the contractor SLA 18. Also here, the interpreter 16 may encode the conditions of the contractor SLA 18 and generate at least one smart contract 21 which may also be stored in the distributed ledger 20.

The rules and conditions set out in the customer SLA 17 and the contractor SLA 18 may comprise, for example, a set of minimum or maximum values of certain sensors present in the device 14 above or below which the contractor 13 must perform maintenance work in the device 14. Another example is the percentage of availability of a software application at a customer's site above or below which the customer must pay a different price for an industrial service.

The transaction data monitored and processed by the smart contracts 21 in the distributed ledger 20 may have their source in one or more devices 14 or applications which can be run by the service provider 11 for the customer 12. A plurality of sensors, monitoring units or programs can generate data which may be sent, preferably in real-time, to the distributed ledger 20. This data can be in the form of a single data set, a plurality of data sets, a report or a plurality of reports. Each smart contract 21 may be configured to monitor and process the data from a predetermined device 14 or application. Furthermore, the contractor 13 can provide work reports 22 or other relevant data to the distributed ledger 20 so that all actions performed by the contractor 13 may be stored and monitored in the distributed ledger 20. Similarly, the customer 12 may send and receive transaction data to and from the distributed ledger 20, for example in the form of reports 22. Also, the service provider 11 may be able to send and retrieve transaction data to and from the distributed ledger 20 such as regular reports 22 which need to be stored.

The interpreter 16 may significantly contribute to the automation of the processes for conflict and accountability resolution by being defined as a special interface between the service provider 11 and distributed ledger 20. It may be the responsibility of the service provider 11 to keep the conflicts at a minimum, and it may be in his interest to reduce the associated costs. The interpreter 16 can therefore be programmed in such a way that it may immediately and automatically react on certain events or transactions reported and stored in the distributed ledger 20. In other words, instead of a manual intervention of the service provider 11 in the case of crucial events or transactions which could lead to a conflict because a condition in an SLA has been violated or is close to being violated, the interpreter 16 may automatically generate a response to the respective party such that a corresponding issue resolution may be performed. Of course, this may be done predominantly for routine procedures which might not require an explicit manual confirmation or decision, for example by an operator. It is also understood, that such automated procedures may be logged such that the service provider 11 may have a full transparent view of all actions performed by the interpreter 16.

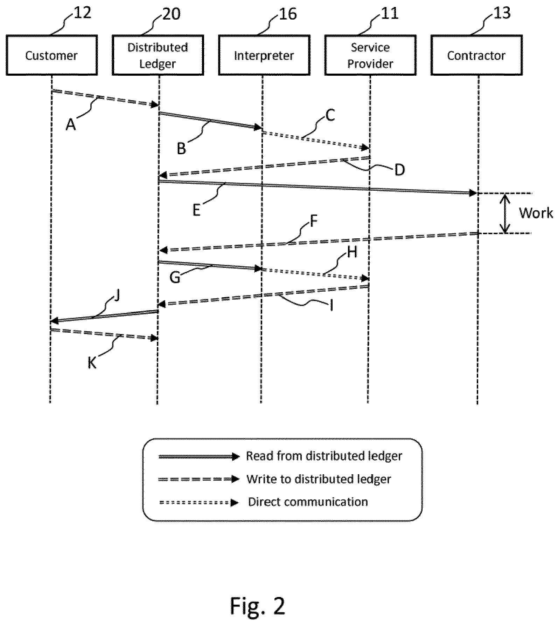

Fig. 2 shows an exemplary workflow diagram using a method for automatic conflict and accountability resolution according to an embodiment. In step A an issue is detected by the customer 12 who sends a report to the distributed ledger 20 with the details of the issue. Alternatively, a smart contract 21 could detect an issue based on transaction data like measurements from the device 14 in which case the smart contract 21 may generate an issue report 22 in the distributed ledger 20. In step B, the interpreter 16 automatically detects the issue reported in the distributed ledger 20 and preferably immediately communicates the issue to the service provider 11. Either manually, as depicted in Fig. 2, or automatically by a set of rules residing with the interpreter 16, an issue response is generated and sent to the distributed ledger 20 in step D. The issue response may define how the issue should be addressed, for example in the form of a work order for the contractor 13. In step E, the contractor 13 reads the issue response from the distributed ledger 20, and performs the required maintenance or repair work according to the work order. Subsequently, the contractor 13 sends his work report to the distributed ledger 20 in step F reporting the completion of the work order. A smart contract 21 in the distributed ledger 20 may verify the completion of the work performed by the contractor 13, for example by checking actual measurements in the device 14 in step G, if the restoration of normal operation can directly be observed in the reported measurements. The result of the verification may be communicated by the interpreter 16 to the service provider 11 in step H. Upon successful verification by the service provider 11, which can be done manually as in the shown embodiment, the service provider 11 reports the completion of the detected issue in the distributed ledger in step I. The customer 12 who may have large interest in monitoring the distributed ledger 20 and may be waiting for the issue to be resolved, reads about the completion of the work order in step J, agrees to the resolution of the issue and confirms the completion of the issue, for example by writing to the distributed ledger 20 in step K.

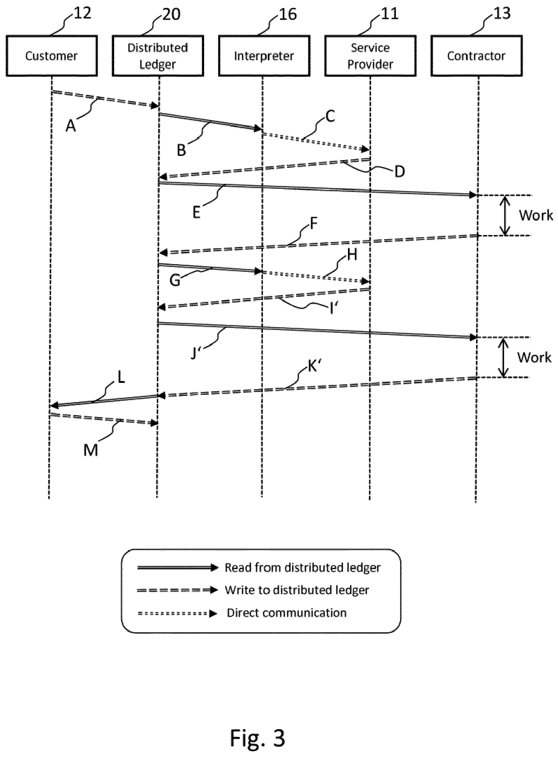

Fig. 3 shows another workflow diagram using a method for automatic conflict and accountability resolution similar to the workflow shown in Fig. 2 but where the interpreter 16 may find that the reported issue has not yet been resolved. Steps A to F of Fig. 2 will be identically performed in the scenario of Fig. 3, and here the interpreter 16 finds, based on the report generated by the smart contract in the distributed ledger 20 in step G', that the issue has not been resolved. For example, the smart contract has found, that certain values have not resumed their normal operation ranges, and thus the report may mark the work of the contractor 13 as incomplete. This can now be reported to the service provider 11 by the interpreter 16 in step H'. The service provider 11 may check the incomplete report and confirm this by sending a corresponding message to the distributed ledger 20 in step I'. As mentioned herein, steps H' and step I' can be performed manually by an operator of service provider 11 as in the shown embodiment, or automatically by the interpreter 16. Based on the work incompletion report in the distributed ledger 20, the contractor 13 who may also be monitoring the distributed ledger 20 for the completion of the issue may learn about the incomplete work instep J' and may go back to the reported faulty device or application and perform the second round of maintenance or repair work. Upon completion of the work task, the contractor 13 may send the related work report in step K' to the distributed ledger 20. Subsequently, steps L and M can be performed after verification of the completion which are identical to steps J and K in Fig. 2.

It has been shown above, that steps E to I of the embodiment shown in Fig. 2 may be repeated several times depending on the outcome of the work performed by the contractor 13. This repetition of steps may be triggered by the interpreter 16 based on the report of a smart contract 21 in the distributed ledger 20.

It should also be mentioned, that the interpreter 16 can define certain system states that may indicate a high probability of or a trend towards a violation of an SLA. Such warning may be handled similarly to an actual issue as described above. Whenever the interpreter 16 issues a warning, the warning may be reported in the distributed ledger 20. In this case, however, the customer 12 might have to give consent to have this impending issue addressed because in fact there may be no real issue yet which would be detected by the respective smart contract 21 in the distributed ledger 20. If the customer 12 reports consent to the distributed ledger, i.e. that the impending issue should be taken care of, the procedure as depicted in Figs. 2 and 3 above may be carried out. On the other hand, if the customer 12 denies the issue, there may be no follow-up action or event. However, certain conditions in the SLA might state that the liability lies with the customer if a warning is ignored, i.e. if a subsequent issue needs to be resolved, the procedure as mentioned above may have to be carried out at the customer's expense. Therefore, accountability and liability issues can be handled by the method and system as described herein.

In view of the above, it is to be understood that embodiments as described herein beneficially provide for optimized handling of factual conflicts and also impending issues while also keeping track of accountability and liability in a largely automated fashion.

While the foregoing is directed to embodiments, other and further embodiments may be devised without departing from the basic scope, and the scope is determined by the claims that follow.

### REFERENCE NUMBERS

- 10: system for automatic conflict and accountability resolution
- 11: service provider
- 12: customer
- 13: contractor
- 14: device/application
- 16: interpreter
- 17: customer SLA
- 18: contractor SLA
- 20: distributed ledger
- 21: smart contract
- 22: report

## Claims

1. Method for automatic conflict and accountability resolution in case of a violation of service level agreement (SLA) terms and conditions in industrial service applications comprising the steps of:
providing an industrial service by a service provider to at least one device or application of a customer according to a contract defining a customer service level agreement;
providing repair and/maintenance services by a contractor for the at least one device or application according to a contract defining a contractor service level agreement;
encoding a customer service level agreement or a contractor service level agreement as a smart contract by an interpreter;
providing a distributed ledger configured for immutably storing contract and transaction data generated by a contracting party, the at least one device or application or the interpreter;
automatically monitoring and/or processing SLA related issues by running at least one smart contract in the distributed ledger; and
providing substantially automated communication regarding SLA related issues between the distributed ledger and the service provider by the interpreter.

2. The method of claim 1, wherein providing substantially automated communication regarding SLA related issues between the distributed ledger and the service provider by the interpreter includes at least one of:
generating an issue report if a violation is detected by a smart contract in the distributed ledger and providing the issue report to the service provider by the interpreter,
generating an issue report if a violation is reported by a transaction in the distributed ledger and providing the issue report to the service provider by the interpreter,
generating an issue response by the interpreter based on the issue report and sending the issue response to the distributed ledger;
generating an issue response by the interpreter based on the input of the service provider and sending the issue response to the distributed ledger;
generating a completion confirmation by the interpreter based on a completion report and sending the completion confirmation to the distributed ledger.

3. The method of any of claims 1 or 2, wherein encoding a service level agreement as a smart contract by an interpreter includes extracting conditions from a human-readable contract, generating an executable smart contract therefrom and launching the smart contract in the distributed ledger.

4. The method of any of claims 1 to 3, wherein automatically monitoring and/or processing SLA related issues in the distributed ledger includes at least one of the following steps:
receiving transaction data from any one or more of a contracting party, the at least one device or application and the interpreter;
providing messages specified for any one or more of a contracting party, the at least one device or application and the interpreter;

5. The method of any of claims 1 to 4, further comprising the steps of:
verifying in the distributed ledger by a smart contract whether an issue is completed, and
if the issue is completed, generating a completion report in the distributed ledger,
if the issue is not completed, generating an issue report in the distributed ledger.

6. The method of any of claims 1 to 5, wherein providing substantially automated communication regarding SLA related issues between the distributed ledger and the service provider by the interpreter also includes at least one of:
generating a warning report if a violation warning limit is detected by a smart contract in the distributed ledger and providing the warning report to the service provider by the interpreter, and
generating a warning report if a violation warning is reported by a transaction in the distributed ledger and providing the warning report to the service provider by the interpreter.

7. The method of claim 6, wherein prior to providing a warning report to the service provider by the interpreter the customer must provide a consent message to the distributed ledger.

8. System for automatic conflict and accountability resolution in case of a violation of service level agreement (SLA) terms and conditions in industrial service applications, the system comprising:
a service provider providing an industrial service to at least one device or application of a customer according to a contract defining a customer service level agreement;
a contractor providing repair and/maintenance services for the at least one device or application according to a contract defining a contractor service level agreement;
an interpreter configured for encoding a customer service level agreement or contractor service level agreement as a smart contract;
a distributed ledger configured for immutably storing contract and transaction data generated by a contracting party, the at least one device or application or the interpreter;
wherein the distributed ledger is further configured for running at least one smart contract to automatically monitor and/or process SLA related issues;
wherein the interpreter is further configured as a communication interface between the distributed ledger and the service provider providing substantially automated communication.

9. The system of claim 8, wherein providing substantially automated communication includes generating events based on data provided in the distributed ledger.

10. The system of any of claims 8 or 9, wherein the distributed ledger is configured for executing a verification process such that a majority of contracting parties may validate any activity performed in the distributed ledger in order to maintain the integrity of the ledger.

11. The system of any of claims 8 to 10, wherein the distributed ledger is configured to be duly replicated and synchronized among the contracting parties.

12. The system of any of claims 8 to 11, wherein the at least one device or application comprises a measurement unit and/or monitoring unit each configured to provide measurement and/or monitoring data to the distributed ledger, preferably in real-time.
